## Europäisches Patentamt
## European Patent Office
## Office européen des brevets

(11) Numéro de publication: **0 121 750**
**B1**

# FASCICULE DE BREVET EUROPÉEN

(45) Date de publication du fascicule du brevet:
**18.03.87**

(51) Int. Cl.⁴: **H 04 L 25/49**, H 04 L 7/02

(21) Numéro de dépôt: **84102331.0**

(22) Date de dépôt: **05.03.84**

(54) Circuit de récupération du rythme d'une transmission synchrone de données utilisant une combinaison des codes biphase L et biphase modifié.

(30) Priorité: **11.03.83 FR 8304038**
**01.12.83 FR 8319211**

(43) Date de publication de la demande:
**17.10.84 Bulletin 84/42**

(45) Mention de la délivrance du brevet:
**18.03.87 Bulletin 87/12**

(84) Etats contractants désignés:
**BE DE FR GB IT LU NL**

(56) Documents cité:
**WO-A-81/02656**
**FR-A-2 335 102**

**PATENTS ABSTRACTS OF JAPAN, vol. 2, no. 97, 15 août 1978, page 4787 E 78**
**IEEE TRANSACTIONS ON MAGNETICS, vol. MAG-15, no. 6, novembre 1979, pages 1465-1467, IEEE, New York, US; J.A. BIXBY et al.: "Q.P., an improved code for high density digital recording"**
**NACHRICHTENTECHNISCHE ZEITSCHRIFT, vol. 23, no. 1, janvier 1970, pages 11-16, Berlin, DE; U. APPEL et al.: "Zusammenstellung und Gruppierung verschiedener Codes für die Übertragung digitaler Signale"**

(73) Titulaire: **ALCATEL, 12, rue de la Baume, F-75008 Paris (FR)**

(72) Inventeur: **Surie, Serge, 60, rue Bronzac, F-94240 L'Hay Les Roses (FR)**
Inventeur: **Marcel, François, 86bis avenue Saint-Laurent, F-91406 Orsay (FR)**

(74) Mandataire: **Weinmiller, Jürgen, Lennéstrasse 9, D-8133 Feldafing (DE)**

## Description

La présente invention concerne les transmissions synchrones de données utilisant un signal qui, en bande de base, est formé d'une succession d'éléments de signal à deux niveaux sans recouvrement, isochrones de durée T pouvant prendre l'une des quatre formes définies par les fonctions:

$$\pm \ \text{signe} \ (\sin \frac{2 \pi t}{T}) \ ; \ \pm \ \text{signe} \ (\cos \frac{2 \pi t}{T})$$

Ces transmissions synchrones de données résultent d'une combinaison des codes biphase L et biphase modifié.

Le biphase L également connu sous la dénomination "Manchester" transforme une suite d'informations binaires disponibles à la cadence 1/T en un signal de transmission formé d'une succession d'éléments de signal à deux niveaux, isochrones et sans recouvrement présentant en milieu de période une transition dont le sens dépend de la valeur de l'information binaire codée.

Le biphase modifié transforme une suite d'informations binaires disponibles à la cadence 1/T en un signal de transmission formé d'une succession d'éléments de signal à deux niveaux, isochrones et sans recouvrement, présentant deux transitions de sens opposés à la fin des premier et troisième quarts de période, le sens de la première transition dépendant de la valeur de l'information binaire codée.

Les signaux résultant des codes biphase L et biphase modifié ont, pour une période Baud 1/T identique, des lobes principaux du spectre de fréquence de même largeur 0,2/T avec un maximum décalé vers les basses frequences pour le biphase L et vers les hautes fréquences pour le biphase modifié. Ils présentent la particularité de pouvoir être considérés comme des modulations à double bande latérale de deux fonctions de Walsh en quadrature:

$$\text{signe} \ (\sin \frac{2 \pi t}{T}), \ \text{signe} \ (\cos \frac{2 \pi t}{T} \ )$$

et de pouvoir être combinés par une modulation en quadrature pour définir un code dont le signal en ligne z'(t) peut s'exprimer, à un facteur multiplicatif près, par:

$$z'(t) = \sum_{K} \left[ (a_K + b_K) \ \text{signe} \ (\cos \frac{2 \pi t}{T}) + (a_K - b_K) \ \text{signe} \ (\sin \frac{2 \pi t}{T}) \right] d \ (t - KT)$$

$a_K$ et $b_K$ étant deux suites synchrones d'informations binaires à transmettre de valeur $\pm$ 1 disponibles a là cadence 1/T et d(t-KT) une fonction du temps ayant une valeur unitaire sur le Kième intervalle Baud et nulle en dehors. Ce code présente l'intérêt de doubler le débit d'informations par rapport aux codes biphase L et biphase modifié sans pour autant doubler la largeur de bande occupée. Son élément de signal peut prendre une parmi quatre formes possibles qui sont définies par les fonctions:

$$\pm \ \text{signe} \ (\sin \frac{2 \pi t}{T}) \ ; \ \pm \ \text{signe} \ (\cos \frac{2 \pi t}{T})$$

et qui peuvent se distinguer les unes des autres à partir des valeurs prises par les niveaux au cours de leurs deuxième et troisième quarts de période.

Avec ce genre de code de transmission, il est facile de repérer dans le signal reçu, placé en bande de base, les périodes Baud des éléments de signal à K $\pi$/2 près en se synchronisant sur les transitions mais il est plus difficile de lever l'incertitude de K $\pi$/2. En effet, il n'est plus possible de lever cette incertitude comme celle de K $\pi$ apparaissant avec le biphase L en distinguant les transitions en milieu de période Baud de celles en extrémités de période Baud par le fait que les unes apparaissent systématiquement et les autres non ou comme celle de K $\pi$/2 apparaissant avec le biphase modifié en se basant sur l'absence systématique de transition en milieu de période Baud car ces deux critères ne sont plus valables.

La présente invention a pour but de résoudre le problème précité à l'aide d'un circuit simple, facile à réaliser sous forme numérique.

Elle a pour objet un circuit de récupération de rythme comportant un circuit de sélection triant, parmi les transitions du signal reçu placé en bande de base, les transitions séparées de celles qui les précèdent immédiatement sensiblement de la durée d'un élément de signal et une base de temps qui est synchronisée sur les transitions triées par le circuit de sélection et qui délivre le rythme récupéré des éléments de signal.

Selon un mode préféré de réalisation, la base de temps comporte un oscillateur délivrant un signal d'horloge à une cadence multiple de celle des éléments de signal et un diviseur qui engendre un premier signal de rythme récupéré à partir dudit signal d'horloge et qui est remis à zéro à chaque transition retenue par le circuit de sélection. L'oscillateur est avantageusement muni d'une boucle à verrouillage de phase à forte constante de temps asservie au signal de sortie du diviseur de manière à engendrer un deuxième signal de rythme récupéré dépourvu de gigue et de sauts de phase parasites.

Toujours selon un mode préféré de réalisation, le circuit de sélection des transitions comporte:

- un détecteur de transition engendrant une impulsion de courte durée en réponse à chaque transition du signal reçu placé en bande de base,

- une porte assurant le triage des impulsions, intercalée entre la sortie du détecteur de transition et une entrée de synchronisation de la base de temps,

- un compteur de temps remis à zéro par les impulsions du détecteur de transition engendrant un ordre d'ouverture de la porte lorsque son compte atteint la valeur d'une durée donnée légèrement inférieure à celle d'un élément de signal

- et un circuit de maintien dudit ordre pendant un court moment intercalé entre le compteur et la porte.

D'autres caractéristiques et avantages de l'invention ressortiront des revendications jointes et de la description ci-après d'un mode de réalisation donné à titre d'exemple. Cette description sera faite en regard du dessin dans lequel:

la figure 1 représente le schéma d'un circuit de récupération de rythme selon l'invention,

la figure 2 est un diagramme de courbes explicitant le fonctionnement du circuit de récupération de rythme de la figure 1.

La figure 3 est un diagramme représentant une succession de symboles résultant d'un code quadriphase et les déformations qu'elle peut subir au cours d'une transmission en bande de base par une ligne téléphonique,

la figure 4 représente un schéma d'un circuit de récupération de rythme rendu peu sensible aux détériorations d'un signal quadriphase par une ligne téléphonique,

et la figure 5 représente une variante d'une partie du circuit représenté à la figure 4.

Dans un signal résultant d'une succession jointive, sans recouvrement, d'éléments de signal isochrones de durée T pouvant prendre l'une des quatre formes possibles définies par les fonctions:

$$\pm \text{ signe } (\sin \frac{2 \pi t}{T}) \; ; \; \pm \text{ signe } (\cos \frac{2 \pi t}{T}),$$

on observe que les transitions consécutives sont espacées d'une durée inférieure à celle T d'un élément de signal à la seule exception près du cas de deux éléments consécutifs ayant des formes définies pour l'un par la fonction:

$$+ \text{ signe } (\sin \frac{2 \pi t}{T})$$

et pour l'autre par la fonction:

$$- \text{ signe } (\sin \frac{2 \pi t}{T})$$

où les transitions de milieu de période de chaque élément de signal se suivent à un intervalle de temps T sans être séparées par d'autres transitions. Les transitions séparées de celles qui les précèdent immédiatement de la durée T d'un élément de signal repèrent donc à coup sûr le milieu de période d'un élément de signal.

En admettant que les quatre formes d'un élément de signal soient équiprobables ce qu'il est toujours possible d'obtenir par un embrouillage préalable des données à transmettre, la probabilité pour que l'on ait une succession de deux éléments de signal donnant lieu à deux transitions consécutives séparées de la durée T d'un élément de signal est de un huitième. Cela correspond à une fréquence moyenne d'apparition de ces dernières transitions égale au seizième du débit binaire de la transmission ce qui est amplement suffisant pour une synchronisation de rythme.

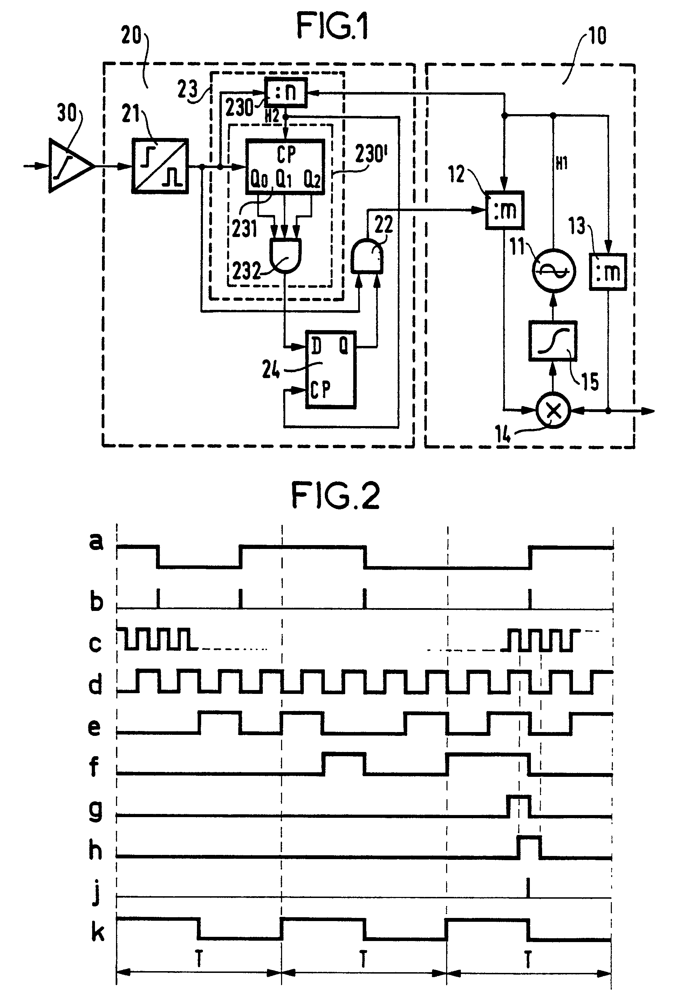

La figure 1 représente le schéma d'un circuit de récupération de rythme synchronisé par les transitions séparées de celles qui les précédent immédiatement sensiblement de la durée T d'un élément de signal. Celui-ci comporte une base de temps 10 synchronisée par un circuit de sélection des transitions 20 précédé d'un circuit de mise en forme 30.

La base de temps 10 comporte un oscillateur contrôlé en tension 11 engendrant un signal d'horloge $H_1$ dont la fréquence est très grande par rapport à celle du rythme des éléments de signal reçus et égale à un multiple entier m de celle-ci, un diviseur par m 12 formé d'un compteur par m incrémenté par le signal d'horloge $H_1$ et remis à zéro par le circuit de sélection des transitions 20 à chaque apparition, dans le signal reçu, d'une transition séparée de celle qui la précéde immédiatement d'une durée sensiblement égale à celle, référencée T, d'un élément de signal et une boucle à verrouillage de phase formée d'un autre diviseur par m 13

3

fonctionnant à partir du signal d'horloge $H_1$, d'un comparateur de phase 14 opérant sur les signaux de sortie des deux diviseurs 12 et 13, et d'un filtre intégrateur 15 intercalé entre le comparateur de phase 14 et une entrée de contrôle en tension de l'oscillateur 11.

Le diviseur par m 12, remis à zéro par le circuit de sélection des transitions 20, délivre un premier signal de rythme récupéré synchronisé sur les milieux de période des éléments de signal reçu. Ce premier signal de rythme récupéré n'est pas utilisable tel quel car il reproduit la gigue de phase affectant les transitions utilisées pour la synchronisation et peut comporter des sauts de phase erronés dus à un triage imparfait des transitions provoqué par les déformations subies en ligne par le signal de transmission. La boucle à verrouillage de phase assure un filtrage de cette gigue et de ces sauts de phase parasites et délivre, en sortie de son diviseur par m 13, un deuxième signal de rythme récupéré synchronisé avec les débuts des éléments de signal reçu, utilisable pour le décodage de ces derniers.

Le circuit de sélection des transitions 20 comporte un détecteur de transition 21 placé en tête transformant chaque transition des éléments de signal reçu en impulsion positive, une porte de triage 22 intercalée entre la sortie du détecteur de transitions 21 et une entrée de synchronisation de la base de temps 10, un compteur de temps 23 qui est remis à zéro par les impulsions du détecteur de transition 21 et qui engendre un ordre d'ouverture de la porte de triage 22 lorsqu'il atteint la valeur d'une durée donnée légèrement inférieure à celle d'un élément de signal, et un circuit de maintien 24 dudit ordre pendant un court moment, intercalé entre le compteur de temps 23 et la porte de triage 22.

Le détecteur de transition 21 peut être formé d'une porte logique de type "ou exclusif" reliée par ses deux entrées à celle du circuit de sélection des transitions 20, l'une directement et l'autre par l'intermédiaire d'un circuit à retard, par exemple de type RC, déterminant la largeur de l'impulsion émise, largeur qui est choisie inférieure à la période du signal d'horloge $H_1$ de la base de temps 10 mais suffisante pour provoquer la remise à zéro du compteur par m 12 de la base de temps 10 et du compteur de temps 23.

Le compteur de temps 23 est incrémenté par le signal d'horloge $H_1$ de la base de temps 10. Il est constitué de deux circuits de comptage en série 230 et 230'. Le circuit de comptage 230 est un compteur-diviseur par n fonctionnant à partir du signal d'horloge $H_1$ et délivrant un signal d'horloge $H_2$ qui a une fréquence huit fois supérieure à celle des éléments de signal. Le circuit de comptage 230' est formé d'un compteur par huit 231 qui est incrémenté par le signal d'horloge $H_2$ et dont les sorties parallèles $Q_0$, $Q_1$ et $Q_2$ sont reliées aux entrées d'une porte logique de type "et" 232 dont la sortie constitue celle du circuit de comptage 230'. Les comptes des deux circuits de comptage 230 et 230' sont remis à zéro par les impulsions du détecteur de transition et les signaux de sortie de ces deux circuits sont délivrés en sortie du compteur de temps 23.

Le circuit de comptage 230' est à déclenchement sur front montant, le signal d'horloge $H_2$, de support cyclique 1/2 entre deux impulsions du détecteur de transition 21, présentant par exemple ici un front montant lorsque le compte du circuit de comptage 230 passe à zéro.

Un ordre d'ouverture de la porte de triage 22 est émis par le compteur de temps 23 chaque fois que celui-ci arrive à la valeur

$$\frac{15}{16}\ T.$$

Un tel ordre se traduit en sortie du compteur de temps 23 par un front descendant du signal d'horloge $H_2$ se produisant alors que le signal fourni par le circuit de comptage 230' est au niveau logique "1" indiquant que ce circuit de comptage est à sept unités de comptage ce qui représente la valeur approchée par défaut de

$$\frac{15}{16}\ T$$

T mesurée à l'aide du signal d'horloge $H_2$.

Le circuit de maintien 24 est formé d'une bascule de type D à déclenchement sur front descendant qui est connectée par son entrée D à la sortie du circuit de comptage 230' et qui est cadencée par le signal d'horloge $H_2$. Cette bascule enregistre chaque ordre d'ouverture de la porte de triage 22 donné par le compteur de temps 23 et maintient cet ordre jusqu'au premier front descendant du signal $H_2$ suivant cet ordre où celui-ci est alors effacé.

La porte de triage 22 est une porte logique de type "et" à deux entrées connectées l'une à la sortie du détecteur de transition 21 et l'autre à la sortie Q de la bascule de type D du circuit de maintien 24.

Le fonctionnement du circuit de sélection des transitions 20 est illustré par la figure 2 qui est un diagramme de courbes tracées en fonction du temps illustrant les états des sorties de ses principaux éléments.

La courbe a donne un exemple d'une succession de trois éléments de signal reçu dont les limites sont repérées par des verticales en pointillés. Seule la dernière transition qui est séparée de celle qui la précède d'une durée égale à celle T d'un élément de signal convient pour la synchronisation.

La courbe b représente le train d'impulsions correspondant engendré par le détecteur de transition 21.

La courbe c représente le signal d'horloge $H_2$ qui est à une fréquence huit fois supérieure à celle du rythme des éléments de signal. La remise à zero du circuit de comptage 230 fait coïncider ses fronts montants avec les impulsions de détecteur de transition 21.

La courbe d représente le signal de la sortie $Q_0$ du compteur 231 qui est à une fréquence moitié de celle du signal d'horloge $H_2$ et dont les transitions correspondent aux fronts montants de ce dernier. La remise à zéro du compteur 231 fait coïncider ses fronts descendants avec les impulsions du détecteur de transition 21.

4

La courbe e représente le signal de la sortie $Q_1$ du compteur 231 dont la fréquence est égale au quart de celle du signal d'horloge $H_2$ et dont les transitions correspondent à des fronts montants de ce dernier. Les première et troisième impulsions du détecteur de transition (courbe b) ont pour effet de le maintenir à l'état bas.

La courbe f représente le signal de la sortie $Q_2$ du compteur 231 dont la fréquence est égale au huitième de celle du signal d'horloge $H_2$ et dont les transitions correspondent à des fronts montants de ce dernier. Il ne parvient à l'état haut que lorsque deux transitions consécutives détectées par le détecteur de transition sont séparées par plus d'une demi-période d'un élément de signal.

La courbe g représente le signal de sortie de la porte logique 232 qui est également celui de la sortie du circuit de comptage 230'. Ce signal n'est au niveau logique 1 que lorsque les trois sorties parallèles $Q_0$, $Q_1$, $Q_2$ du compteur 231 le sont également c'est-à-dire pendant une période du signal d'horloge $H_2$ si le compteur 231 a pu compter pendant une durée égale à sept huitième de la période d'un élément de signal.

La courbe h représente le signal de sortie du circuit de maintien 24 qui n'est autre que le signal de sortie du circuit de comptage 230' échantillonné sur les fronts descendants du signal d'horloge $H_2$.

La courbe j représente le signal de sortie de la porte 22 qui n'est autre que celui du circuit des sélections des transitions 20 et qui est formé des impulsions du détecteur de transition 21 qui sont séparées de celles qui les précèdent immédiatement d'une durée sensiblement égale à celle T d'un élément de signal.

La courbe k représente le premier signal de rythme récupéré qui est issu du diviseur par m 12 de la base de temps 10 et qui est synchronisé avec les milieux de certains éléments de signaux dont le dernier de la succession de trois représenté par la courbe a.

Dans la figure 2, on a illustré un cas où les transitions du signal reçu coïncident avec les fronts montants du signal d'horloge $H_2$. Bien entendu, en raison par exemple d'une gigue de phase affectant les transitions du signal reçu, il peut exister un léger décalage entre ces transitions et les fronts montants du signal d'horloge $H_2$. Il est facile de voir que la porte de triage 22 est ouverte à toute impulsion engendrée par le détecteur de transition 21 correspondant à une transition séparée de celle qui la précède immédiatement d'une durée supérieure à

$$(T - \frac{T}{16})$$

mais inférieure à

$$(T + \frac{T}{16}),$$

cette porte se refermant au bout d'une durée égale à

$$\frac{T}{16}$$

après le passage d'une telle impulsion.

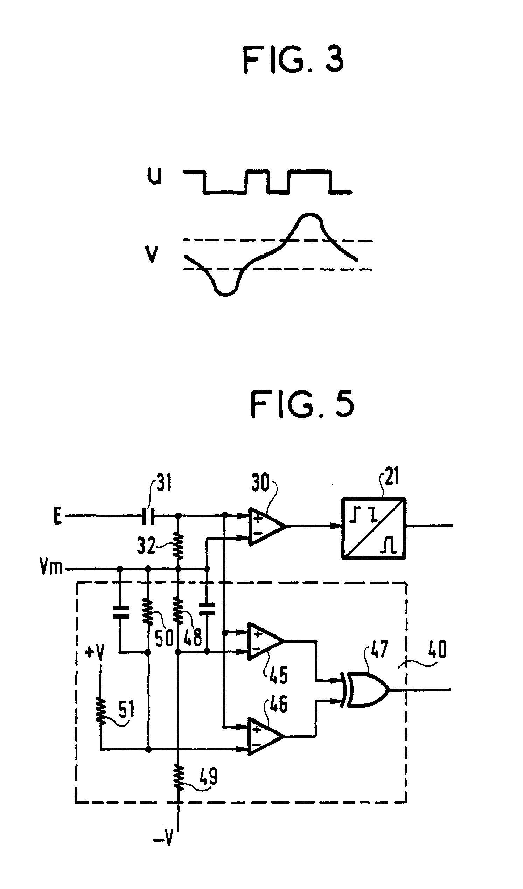

Le signal résultant d'un codage quadriphase est formé d'une succession d'impulsions de largeur T/4, T/2, 3 T/4 et T. Lorsqu'il est transmis en bande de base par une ligne téléphonique, il subit un filtrage passe-bas affectant en premier ses impulsions les plus courtes de largeur T/4. Ce filtrage peut même être suffisamment sévère pour que l'une au moins des transitions limitant ces impulsions en T/4 disparaisse. Lorsque cela se produit avec une succession des deux formes de symboles du biphase modifié telle que représentée en u à la figure 3 où deux impulsions en T/4 de signes alternés se présentent consécutivement, il apparaît en réception un signal, tel que représenté en v, aboutissant, lorsqu'il est appliqué à un circuit de remise en forme par écrêtage, à une fausse configuration de deux transitions consécutives qui sont séparées de la durée d'un symbole mais placées en limite et non au milieu d'un symbole, et qui perturbent la récupération de rythme.

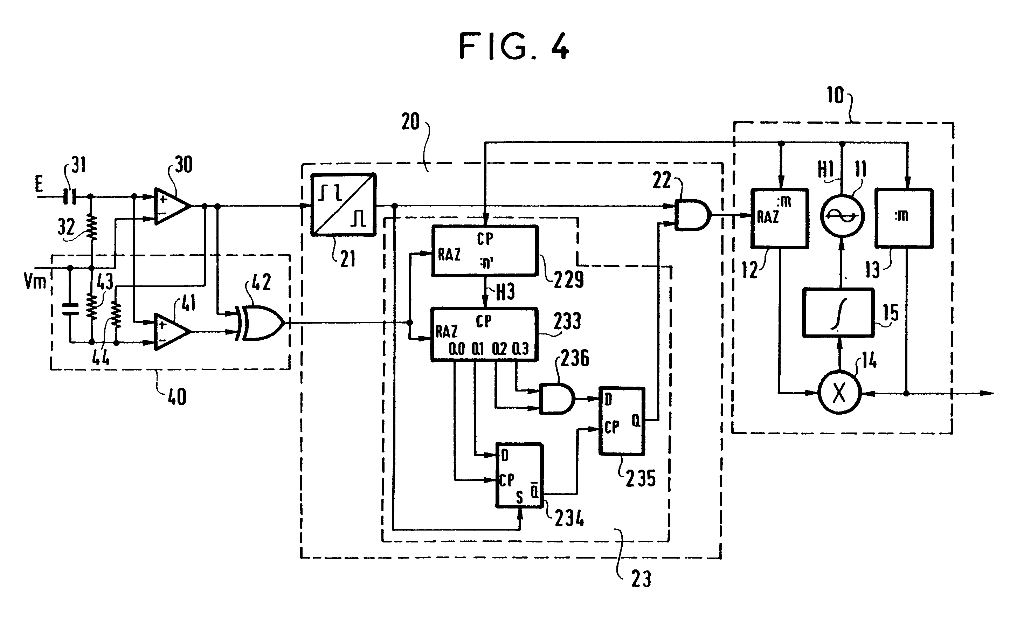

La figure 4 représente un exemple de circuit de récupération de rythme rendu peu sensible à ces fausses configurations. Ce circuit comporte, outre la base de temps 10 synchronisée par un circuit de sélection des transitions 20 et un circuit de mise en forme 30, un circuit d'inhibition 40 du circuit de sélection des transitions 20.

La base de temps 10 à la même constitution que précédemment.

Le circuit de sélection des transitions 20 diffère légèrement du précédent par la constitution du compteur de temps 23 et du circuit de maintien, engendrant l'ordre d'ouverture de la porte logique de triage 22.

Le compteur de temps 23 et son circuit de maintien comporte un compteur diviseur par n' 229 suivi d'un compteur binaire à quatre étages 233 associé à deux registres de type D 234, 235 et une porte logique de type "et" 236. Le compteur diviseur par n' 229 est cadencé par le signal d'horloge $H_1$ de la base de temps 10 et remis à zéro par le circuit d'inhibition 40 dans une certaine plage autour de chaque transition du signal reçu placé en bande de base. Il délivre un signal d'horloge $H_3$ à une fréquence seize fois superieure au rythme des symboles contenus dans le signal reçu. Le compteur binaire 233 progresse sous l'action du signal d'horloge $H_3$ et est remis à zéro par le circuit d'inhibition 40 en synchronisme avec le compteur diviseur 229. Le registre de type D 234, connecté aux sorties $Q_0$ et $Q_1$ des premier et deuxième étages du compteur binaire 233 par ses entrées d'horloge et de données et à la sortie du détecteur de transition 21 par son entrée de remise à un, bascule sur les fronts montants de son signal d'horloge et délivre sur sa sortie complémentée $\bar{Q}$ un signal au quadruple de la fréquence de rythme des symboles reçus présentant des fronts montants chaque fois que le compteur de temps arrive aux valeurs

$$\frac{1}{16}\ T, \ \frac{5}{16}\ T, \ \frac{9}{16}\ T, \ \frac{13}{16}\ T \ \text{etc...}$$

La porte logique de type "et" 236 connectée par ses entrées aux sorties $Q_2$ et $Q_3$ des troisième et quatrième étages du compteur binaire 238 est en sortie, au niveau logique 1 lorsque le compteur de temps est entre les valeurs

$$\frac{12}{16}\ T \ \text{ et } \frac{15}{16}\ T$$

incluses. Le registre de type D 235 connecté par son entrée donnée à la sortie de la porte logique de type "et" 236 et par son entrée d'horloge à la sortie $\bar{Q}$ du registre de type D 234 bascule sur les fronts montants de son horloge. Sa sortie passe au niveau logique 1 débloquant la porte de triage 22 chaque fois que le compteur de temps parvient à la valeur

$$\frac{13}{16}\ T$$

et passe au niveau logique 0 si elle n'y est pas déjà, chaque fois que le compteur de temps atteint la valeur

$$\frac{1}{16}\ T.$$

Une fois que le compteur de temps a atteint la valeur

$$\frac{13}{16}\ T,$$

la sortie du registre de type D 235 passe au niveau logique 1 débloquant la porte de triage 22. Il peut alors se produire deux éventualités selon qu'une transition apparaît ou non avant que le compteur de temps ait atteint par débordement naturel la valeur

$$\frac{1}{16}\ T.$$

Si aucune transition n'est apparue, la sortie du registre de type D 235 passe au niveau logique 0 et bloque la porte d'aiguillage 22 dès que le compteur de temps atteint à nouveau la valeur

$$\frac{1}{16}\ T.$$

Si, par contre, une transition est apparue et a franchi la porte de triage 22, elle a également provoqué par le circuit d'inhibition une remise à zéro du compteur de temps pendant laquelle le registre de type D 234 se trouve dans un état indéterminé. Bloqué au niveau logique 1 sur sa sortie complémentée il ne délivrerait pas lorsque le compteur de temps atteindrait à nouveau la valeur

$$\frac{1}{16}\ T \ ,$$

le front montant nécessaire au basculement du registre D 235 ce qui retarderait le blocage de la porte de triage 22 d'un quart de durée d'un symbole. C'est pour éviter cela que la sortie complémentée $\bar{Q}$ du registre de type D 234 est remise à 0 à chaque transition du signal reçu par l'action du détecteur de transition 21 sur l'entrée de remise à un du registre de type D 234.

Le circuit de mise en forme 30 est constitué d'un amplificateur différentiel à grand gain fonctionnant en écrêteur. Le signal formé des symboles reçus placés en bande de base est appliqué à l'entrée E du circuit et parvient, par une capacité de couplage 31, à l'entrée non-inverseuse de l'amplificateur différentiel. Les deux entrées de l'amplificateur différentiel sont polarisées par l'intermédiaire d'une résistance 32 à la valeur moyenne Vm du signal reçu qui est nulle en raison des formes équilibrées des symboles d'un codage quadriphase.

Le circuit d'inhibition 40 est formé d'un amplificateur différentiel 41 et d'une porte logique de type "ou exclusif" 42. L'amplificateur différentiel 41 est monté en comparateur avec deux seuils distincts, un seuil bas utilisé lorsque le signal formé de symboles reçus a une amplitude instantanée inférieure à sa valeur moyenne et un seuil haut utilisé dans le cas contraire. Pour ce faire, il a son entrée non inverseuse connectée à l'entrée E par l'intermédiaire de la capacité de couplage 31, en parallèle sur celle de l'amplificateur différentiel du circuit de mise en forme 30, et son entrée inverseuse connectée à la prise intermédiaire d'un pont diviseur résistif 43, 44 connecté entre la sortie et l'entrée inverseuse de l'amplificateur différentiel du circuit de mise en forme 30. La porte logique de type "ou exclusif" 42 a deux entrées connectées aux sorties de l'amplificateur différentiel 41 et de celui du circuit de mise en forme 30.

Lorsque l'amplitude instantanée du signal appliqué à l'entrée E est inférieure à la valeur moyenne du signal, la sortie de l'amplificateur différentiel du circuit de mise en forme 30 est au niveau bas entraînant la sélection du seuil bas pour l'amplificateur différentiel 41 et un comportement non inverseur de la porte logique de type "ou exclusif" 42. Si l'amplitude instantanée du signal appliqué à l'entrée E est inférieure au seuil bas, l'amplificateur différentiel 41 engendre en sortie un niveau logique bas, transmis par la porte logique de type "ou exclusif" 42 en sortie du circuit inhibiteur 40, correspondant à un état inactif de ce dernier. Si l'amplitude instantanée du signal appliqué à l'entrée E est supérieure au seuil bas tout en restant inférieure à la valeur moyenne du signal, l'amplificateur différentiel 41 engendre en sortie un niveau logique haut, transmis par la porte logique de type "ou exclusif" 42 en sortie du circuit inhibiteur 40, entraînant la mise à zéro du compteur de temps 23.

Lorsque l'amplitude instantanée du signal appliqué à l'entrée E est supérieure à la valeur moyenne du signal, la sortie de l'amplificateur différentiel du circuit de mise en forme 30 est au niveau haut entraînant la sélection du seuil haut pour l'amplificateur différentiel 41 et un comportement en inverseur de la porte logique de type "ou exclusif" 42. Si l'amplitude instantanée du signal appliqué à l'entrée E, tout en étant supérieure à la valeur moyenne du signal reste inférieure au seuil haut, l'amplificateur différentiel 41 engendre un niveau logique bas transformé par la porte logique de type "ou exclusif" 42 en un niveau logique haut en sortie du circuit d'inhibition 40 entraînant la mise à zéro du compteur de temps 23. Si l'amplitude instantanée du signal appliqué à l'entré E est supérieure au seuil haut, l'amplificateur différentiel 41 engendre en sortie un niveau logique haut transformé par la porte logique de type "ou exclusif" 42 en un niveau logique bas en sortie du circuit d'inhibition 40 correspondant à un état inactif de ce dernier.

En résumé, le niveau logique de sortie du circuit d'inhibition 40 est bas lorsque l'amplitude instantanée du signal appliqué à l'entrée E est en dehors de la plage limitée par les seuils haut et bas de l'amplificateur différentiel 41 et haut dans le cas inverse. En choisissant ces deux seuils de part et d'autre de la valeur moyenne du signal de manière à englober dans ladite plage les méplats provoqués dans le signal reçu placé en bande de base par les restes des impulsions en T/4 (courbe v de la figure 3), on empêche la prise en compte par le circuit de récupération de rythme des transitions précédées et suivies de ces restes d'impulsions en évitant, par l'initialisation du compteur de temps 23 lorsque l'amplitude instantanée du signal appliqué à l'entrée E franchit les limites de ladite plage, que lors d'une suite de deux tels méplats espacés de la durée T d'un symbole, ce compteur de temps n'arrive à sa valeur de comptage qui déclenche l'ouverture de la porte de triage 22.

Dans l'exemple de réalisation illustré, le circuit d'inhibition 40 initialise le compteur de temps 23 lorsque l'amplitude instantanée du signal appliqué à l'entrée E franchit les limites de la plage délimitée par les seuils haut et bas de l'amplificateur différentiel 41 et maintient en outre cette initialisation pendant toute la durée au cours de laquelle l'amplitude instantanée de ce signal reste dans cette plage. Bien qu'en pratique cela conduise à une réalisation légèrement moins simple, on pourrait prévoir de n'initialiser le compteur qu'aux seuls passages par les frontières de cette plage en remplaçant par exemple la porte "ou exclusif" 42 disposée en sortie de l'amplificateur différentiel 41 par un détecteur de transition traitant le signal de sortie de cet amplificateur et assurant l'initialisation du compteur de temps à chaque transition de ce dernier signal.

La figure 5 représente une variante de réalisation du circuit inhibiteur 40 de la figure 4 montré, pour une meilleure compréhension, en compagnie du circuit de mise en forme 30 et du circuit détecteur de transition 21. Dans cette variante le circuit inhibiteur 40 comporte deux amplificateurs différentiels 45, 46 dont les sorties sont connectées aux entrées d'une porte logique de type "ou exclusif" 47. L'amplificateur différentiel 45 est monté en comparateur à seuil bas, son entrée non inverseuse étant connectée à l'entrée E du circuit par l'intermédiaire de la capacité de couplage 31 et son entrée inverseuse étant portée à un potentiel de seuil bas par la prise intermédiaire d'un pont diviseur résistif 48, 49 connecté entre un point de potentiel à la valeur moyenne Vm du signal et un point de potentiel plus négatif -V. L'amplificateur différentiel 46 est monté en comparateur à seuil haut, son entrée non inverseuse étant connectée en parallèle sur celle de l'amplificateur différentiel 46 et son entrée inverseuse étant portée à un potentiel de seuil haut par la prise intermédiaire d'un pont diviseur résistif 50, 51 connecté entre le point de potentiel à la valeur moyenne Vm du signal et un point de potentiel plus positif +V.

En dehors de la plage limitée par les seuils haut et bas, les amplificateurs différentiels 45 et 46 ont les mêmes niveaux de sortie ce qui engendre en sortie de la porte logique de type "ou exclusif" 47 un niveau logique bas correspondant à un état inactif du circuit inhibiteur 40. Dans cette plage, les amplificateurs différentiels 45 et 46 ont des niveaux de sortie différents se traduisant en sortie de la porte logique de type "ou exclusif" 47 par un niveau logique haut entraînant la mise à zéro du compteur de temps 23.

On peut, sans sortir du cadre de l'invention modifier certaines dispositions ou remplacer certains moyens par des moyens équivalents.

**0 121 750**

### Revendications

1/ Circuit de récupération du rythme d'une transmission synchrone de données utilisant un signal qui, en bande de base, est formé d'une succession d'éléments de signal à deux niveaux, sans recouvrement, isochrones de durée T pouvant prendre l'une des quatre formes définies par les fonctions:

$$\pm \text{ signe } (\sin \frac{2\pi t}{T}) \; ; \; \pm \text{ signe } (\cos \frac{2\pi t}{T}),$$

caractérisé en ce qu'il comporte un circuit de sélection des transitions (20) triant, parmi les transitions du signal reçu placé en bande de base, les transitions séparées de celles qui les précèdent immédiatement d'un délai situé dans une plage arbitraire autour de la durée d'un symbole compris entre les 3/4 et 5/4, bornes exclues, de la durée d'un élément de signal et une base de temps (10) qui est synchronisée sur les transitions triées par le circuit de sélection (20) et qui délivre le rythme récupéré des éléments de signal.

2/ Circuit selon la revendication 1, caractérisé en ce que la base de temps (10) comporte un oscillateur (11) délivrant un signal d'horloge à une cadence multiple de celle des éléments de signal et un diviseur (12) qui engendre un premier signal de rythme récupéré à partir dudit signal d'horloge et qui est remis à zéro à chaque transition retenue par le circuit de sélection (20).

3/ Circuit selon la revendication 2, caractérisé en ce que l'oscillateur (11) de la base de temps (10) est muni d'une boucle à verrouillage de phase à forte constante de temps asservie au signal de sortie du diviseur (12), ladite boucle comportant un autre diviseur (13) engendrant à partir dudit signal d'horloge un deuxième signal de rythme récupéré dépourvu de gigue, un comparateur de phase (14) recevant en entrée les premier et deuxième signaux de rythme récupéré et un filtre passe-bas (15) à forte constante de temps intercalé entre la sortie du comparateur de phase (14) et une entrée de commande en tension de la fréquence de l'oscillateur (11).

4/ Circuit selon la revendication 1, caractérisé en ce que le circuit de sélection des transitions (20) comporte:
- un détecteur de transition (21) engendrant une impulsion de courte durée en réponse à chaque transition du signal reçu placé en bande de base,
- une porte (22) qui assure le triage des impulsions et qui est intercalée entre la sortie du détecteur de transition (21) et une entrée de synchronisation de la base de temps (10),
- un compteur de temps (23) qui est remis à zéro par les impulsions engendrées par le détecteur de transition (21) et qui engendre un ordre d'ouverture de la porte (22) lorsque son compte atteint la valeur d'une durée donnée légèrement inférieure à celle d'un élément de signal
- et un circuit de maintien (24) dudit ordre pendant un court moment, intercalé entre le compteur de temps (23) et la porte (22).

5/ Circuit selon la revendication 4 dans lequel le compteur de temps (23) est incrémenté par un premier signal d'horloge (H1) définissant des intervalles de temps élémentaires très petits par rapport à la durée d'un élément de signal mais supérieurs à la durée des impulsions du détecteur de transition (21), caractérisé en ce que ledit compteur de temps (23) est constitué de deux circuits de comptage (230 et 230') en série dont le premier (230) de la série, incrémenté par le premier signal d'horloge (H1), délivre un deuxième signal d'horloge (H2) définissant des intervalles de temps élémentaires petits par rapport à la durée d'un élément de signal, et dont le second (230') délivre un signal indiquant si la valeur de comptage de ce second circuit de comptage (230') correspond ou non à la valeur approchée par défaut de ladite durée donnée mesurée à l'aide du deuxième signal d'horloge, et en ce que le circuit de maintien (24) est formé d'une bascule de type D qui est connectée par son entrée D à la sortie du second circuit de comptage (230') et qui reçoit le deuxième signal d'horloge sur son entrée d'horloge, ledit second circuit de comptage (230') et ladite bascule étant déclenchés sur des fronts de sens différents du deuxième signal d'horloge.

6/ Circuit selon la revendication 5, caractérisé en ce que le premier signal d'horloge (H1) est engendré par la base de temps (10).

7/ Circuit selon la revendication 1, caractérisé en ce qu'il comporte en outre un circuit d'inhibition (40) du circuit de sélection des transitions (20) qui initialise le compteur de temps (23) de celui-ci lorsque l'amplitude instantanée du signal reçu placé en bande de base franchit les limites d'une plage prédéterminée entourant la valeur d'amplitude moyenne dudit signal.

8/ Circuit selon la revendication 7, comportant en outre un circuit de mise en forme (30) détectant les transitions ou passages par la valeur d'amplitude moyenne du signal reçu placé en bande de base, caractérisé en ce que le circuit d'inhibition (40) comporte un amplificateur différentiel (41) monté en comparateur à deux seuils avec une entrée non inverseuse connectée en parallèle sur celle du circuit de mise en forme et une entrée inverseuse connectée à la prise intermédiaire d'un pont diviseur résistif (43, 44) connecté entre la sortie du circuit de mise en forme (30) et un point porté au potentiel de la valeur d'amplitude moyenne du signal reçu, et une porte logique de type "ou exclusif" à deux entrées (42) connectées en sortie du circuit de mise en forme (30) et de l'amplificateur différentiel (41).

9/ Circuit selon la revendication 7, caractérisé en ce que le circuit d'inhibition (40) comporte :.
- un premier amplificateur différentiel (45) monté en comparateur à seuil avec une entrée non inverseuse à laquelle est appliqué le signal reçu placé en bande de base et une entrée inverseuse portée à un premier seuil de tension inférieur à la valeur d'amplitude moyenne dudit signal,

- un deuxième amplificateur différentiel (46) monté en comparateur à seuil avec une entrée non inverseuse à laquelle est appliqué le signal reçu placé en bande de base et une entrée inverseuse portée à un deuxième seuil de tension supérieur à la valeur d'amplitude moyenne dudit signal - et une porte logique de type "ou exclusif" (47) à deux entrées connectées aux sorties des deux amplificateurs différentiels (45, 44).

## Patentansprüche

1. Schaltungsanordnung zur Wiedergewinnung des Rhythmus einer synchronen Datenübertragung unter Verwendung eines Signals, das im Basisband aus einer Folge von isochronen Zweipegel-Signalelementen einer Dauer T ohne Überdeckung gebildet wird, das eine der vier durch die folgenden Formeln definierten Formen annehmen kann:

$\pm$ Vorzeichen (sin $2\pi t/T$); $\pm$ Vorzeichen (cos $2\pi t/T$)

dadurch gekennzeichnet, daß sie einen Übergangsselektionskreis (20) enthält, der unter den Übergängen des im Basisband liegenden Empfangssignals diejenigen Übergänge aussondert, die von den ihnen unmittelbar vorhergehenden Übergängen einen zeitlichen Abstand aufweisen, der in einem gewählten Bereich um die Dauer eines Symbols, zwischen 3/4 und 5/4 der Dauer eines Signalelements, mit Ausnahme der Grenzwerte, liegt, und daß die Vorrichtung eine Zeitbasis (10) aufweist, die auf die vom Selektionskreis (20) ausgesonderten Übergänge synchronisiert ist und den wiedergewonnenen Rhythmus der Signalelemente liefert.

2. Schaltungsanordnung nach Anspruch 1, dadurch gekennzeichnet, daß die Zeitbasis (10) einen Oszillator (11), der ein Taktsignal einer Frequenz liefert, die ein Vielfaches der Frequenz der Signalelemente ist, und einen Teiler (12) aufweist, der ein erstes wiedergewonnenes Rhythmussignal ausgehend von diesem Taktsignal erzeugt und durch jeden von dem Selektionskreis (20) ausgesonderten Übergang auf Null gesetzt wird.

3. Schaltungsanordnung nach Anspruch 2, dadurch gekennzeichnet, daß der Oszillator (11) der Zeitbasis (10) eine Phasenverriegelungsschleife mit großer Zeitkonstante besitzt, die vom Ausgangssignal des Teilers (12) getriggert wird, wobei diese Schleife einen weiteren Teiler (13), der ausgehend vom Taktsignal ein zweites wiedergewonnenes Rhythmussignal erzeugt, das keine Phasenschwankungen mehr aufweist, einen Phasenkomparator (14), der eingangsseitig das erste und zweite wiedergewonnene Rhythmussignal zugeführt erhält, und ein Tiefpaßfilter (15) großer Zeitkonstante enthält, das zwischen den Ausgang des Phasenkomparators (14) und einen Spannungseingang zur Frequenzsteuerung des Oszillators (11) eingefügt ist.

4. Schaltungsanordnung nach Anspruch 1, dadurch gekennzeichnet, daß der Übergangsselektionskreis (20) aufweist:
- einen Übergangsdetektor (21), der einen kurzdauernden Impuls bei jedem Übergang des Empfangssignals im Basisband erzeugt, - ein Tor (22), das die Aussonderung der Impulse bewirkt und zwischen den Ausgang des Übergangsdetektors (21) und einen Synchronisationseingang der Zeitbasis (10) eingefügt ist,
- einen Zeitzähler (23), der durch die vom Übergangsdetektor (21) erzeugten Impulse auf Null gesetzt wird und einen Befehl zur Öffnung des Tors (22) liefert, wenn sein Zählerstand den Wert einer gegebenen Dauer erreicht, die geringer als die eines Signalelements ist,
- und einen Haltekreis (24) für diesen Befehl während eines kurzen Augenblicks, wobei dieser Haltekreis zwischen den Zeitzähler (23) und das Tor (22) eingefügt ist.

5. Schaltungsanordnung nach Anspruch 4, in der der Zeitzähler (23) von einem ersten Taktsignal (H1) weitergezählt wird, der Elementarzeitintervalle definiert, die bezüglich der Dauer eines Signalelements sehr kurz sind, aber größer als die Dauer der Impulse des Übergangsdetektors (21), dadurch gekennzeichnet, daß der Zeitzähler (23) aus zwei Zählkreisen (230 und 230') in Reihe besteht, von denen der erste (230) durch das erste Taktsignal (H1) weitergezählt wird und ein zweites Taktsignal (H2) liefert, das Elementarzeitintervalle definiert, die kurz bezüglich der Dauer eines Signalelements sind, während der zweite Zählkreis (230') ein Signal liefert, das angibt, ob der Zählwert des zweiten Zählkreises (230') dem Näherungswert in Abwesenheit des mithilfe des zweiten Taktsignals gemessenen Werts entspricht oder nicht, und daß der Haltekreis (24) von einer Kippstufe vom D-Typ gebildet wird, die mit ihrem D-Eingang an den Ausgang des zweiten Zählkreises (230') angeschlossen ist und das zweite Taktsignal über ihren Takteingang zugeführt erhält, wobei der zweite Zählkreis (230') und diese Kippstufe durch Flanken unterschiedlicher Richtung des zweiten Taktsignals ausgelöst werden.

6. Schaltungsanordnung nach Anspruch 5, dadurch gekennzeichnet, daß das erste Taktsignal (H1) von der Zeitbasis (10) erzeugt wird.

7. Schaltungsanordnung nach Anspruch 1, dadurch gekennnzeichnet, daß sie außerdem einen Sperrkreis (40) für den Übergangsselektionskreis (20) aufweist, der dessen Zeitzähler (23) auf den Zählanfang zurücksetzt, wenn die Augenblicksamplitude des Empfangssignals im Basisband die Grenzen eines vorgegebenen Bereichs überschreitet, der sich zu beiden Seiten des mittleren Amplitudenwerts dieses Signals erstreckt.

8. Schaltungsanordnung nach Anspruch 7, die außerdem einen Impulsformungskreis (30) aufweist, der die Übergänge oder Durchgänge des Empfangssignals im Basisband durch den mittleren Amplitudenwert erkennt, dadurch gekennzeichnet, daß der Sperrkreis (40) einen Differentialverstärker (41) aufweist, der als Komparator mit zwei Schwellen geschaltet ist und einen nicht invertierenden Eingang, der parallel an den Eingang des Formgebungskreises angeschlossen ist, sowie einen invertierenden Eingang besitzt, der an den Zwischenabgriff einer Widerstandsteilerbrücke (43, 44) angeschlossen ist, die zwischen dem Ausgang des Impulsformungskreises (30) und einem auf das Potential des mittleren Amplitudenwerts des empfangenen Signals gebrachten Punkt eingefügt ist, und daß der Sperrkreis (40) außerdem ein logisches Tor vom Exklusiv-ODER Typ mit zwei Eingängen (42) besitzt, die an die Ausgänge des Impulsformungskreises (30) und des Differentialverstärkers (41) angeschlossen sind.

9. Schaltungsanordnung nach Anspruch 7, dadurch gekennzeichnet, daß der Sperrkreis (40) aufweist:
- einen ersten Differentialverstärker (45), der als Schwellenkomparator geschaltet ist und einen nicht invertierenden Eingang, an den das Empfangssignal im Basisband angelegt ist, sowie einen invertierenden Eingang besitzt, der auf eine erste Spannungsschwelle unterhalb des mittleren Amplitudenwerts dieses Signals gebracht ist,
- einem zweiten Differentialverstärker (46), der als Schwellenkomparator geschaltet ist und einen nicht invertierenden Eingang, an den das Empfangssignal im Basisband angelegt ist, und einen invertierenden Eingang besitzt, der auf eine zweite Spannungsschwelle oberhalb des mittleren Amplitudenwerts dieses Signals gebracht ist,
- und ein logisches Tor von Exklusiv-ODER Typ (47) mit zwei Eingängen, die an die Ausgänge der beiden Differentialverstärker (45, 46) angeschlossen ist.

## Claims

1. A circuit for recovering the rhythm of a synchronous data transmission using a signal which, in the baseband, is formed by a succession of two-level signal elements, without overlap, isochronous and of duration T, able to take one of the four forms defined by the functions:

$$\pm \text{ sign } (\sin 2\pi t/T); \pm \text{ sign } (\cos 2\pi t/T)$$

characterized in that said circuit comprises a transition selection circuit (20) adapted to extract those transmissions from the transitions in the received signal, in the baseband, which are separated from their immediately preceding transitions by a time-delay situated in an arbitrary range, bracketing a symbol duration of between 3/4 and 5/4 times, borders exclusive, of the duration of a signal element, and that it comprises a timebase (10) which is synchronised on the transitions extracted by said selection circuit (20) and which delivers the recovered rhythm of the signal elements.

2. A circuit according to claim 1, characterized in that said timebase (10) comprises an oscillator (11) adapted to deliver a clock signal at a frequency which is a multiple of the signal element frequency, and a divider (12) adapted to generate a first recovered rhythm signal from said clock signal and which is reset to zero on each transition retained by said selection circuit (20).

3. A circuit according to claim 2, characterized in that said oscillator (11) of said time base (10) is provided with a phase-locked loop having a high-time constant and tuned onto the output signal of said divider (12), said loop comprising another divider (13) adapted to generate from said clock signal a second recovered rhythm signal free of jitter, a phase comparator (14) adapted to receive said first and second recovered rhythm signals, and a high time constant low-pass filter (15) inserted between the output of said phase comparator (14) and a voltage control input of said oscillator (11) controlling its frequency.

4. A circuit according to claim 1, characterized in that said transition selection circuit (20) comprises:.
- a transition detector (21) adapted to generate a short duration pulse in response to each transition of the received signal, in the baseband,
- a gate (22) adapted to extract the pulses, inserted between the output of said transition detector (21) and a synchronisation input of said timebase (10),
- a time counter (23) which is reset to zero by the pulses generated by said transition detector (21) and which generates an order to open said gate (22) whenever its count reaches the value corresponding to a given duration slightly less than that of a signal element,
- and a hold circuit (24) adapted to hold said order for a short time interval, inserted between said time counter (23) and said gate (22).

5. A circuit according to claim 4, wherein said time counter (23) is incremented by a first clock signal (H1) defining elementary time intervals which are very short relative to the duration of a signal element but longer than the duration of the pulses from said transition detector (21), characterized in that said time counter (23) comprises two counting circuits (230, 230') in series of which the first in the series (230), incremented by said first clock signal (H1), delivers a second clock signal (H2) defining elementary time intervals which are short relative to the duration of a signal element, and of which the second in the series (230') delivers a signal indicating whether the count value of said second counting circuit (230') corresponds or not to the approximative value by default of said given duration measured by means of said second clock signal, and that said hold circuit (24) is formed by a type D bistable which is connected by its D input to the output of said second counting circuit (230') and which receives said second clock signal on its clock input, said second counting circuit (230') and said bistable being triggered on oppositely directed edges of said second clock signal.

6. A circuit according to claim 5, characterized in that said first clock signal (H1) is generated by said timebase.

7. A circuit according to claim 1, characterized in that it further comprises a disabling circuit (40) adapted to disable said transition selection circuit (20) which initializes said time counter (23) of the latter whenever the instantaneous amplitude of the received signal, in the baseband, crosses the limits of a predetermined range bracketing the average amplitude of said signal.

8. A circuit according to claim 7, further comprising a signal shaping circuit (30) detecting the transitions or crossings of the average value of the received signal, in the baseband, characterized in that said disabling circuit (40) comprises a differential amplifier (41) configured as a two-threshold comparator with a non-inverting input connected in parallel with that of said signal shaping circuit, and an inverting input connected to the intermediate tap of a resistive divider bridge (43, 44) connected between the output of said signal shaping circuit (30) and a point held at a potential corresponding to the average amplitude of the received signal, and a two-input exclusive OR gate connected to the outputs of said signal shaping circuit (30) and of said differential amplifier (41).

9. A circuit according to claim 7, characterized in that said disabling circuit (40) comprises:
- a first differential amplifier (45) configured as a threshold comparator with a non-inverting input to which is applied the received signal, in the baseband, and an inverting input held at a first voltage threshold below the average amplitude value of said signal,
- a second differential amplifier (46) configured as a threshold comparator with a non-inverting input to which is applied the received signal, in the baseband, and an inverting input held at a second voltage threshold above the average amplitude value of said signal,
- and an exclusive-OR gate (47) with two inputs connected to the outputs of said two differential amplifiers (45, 46).

11

# FIG.1

# FIG.2

# FIG. 3

# FIG. 5

FIG. 4